Europäisches Patentamt

European Patent Office

Office européen des brevets

(11) Veröffentlichungsnummer: **0 285 222 B1**

## EUROPÄISCHE PATENTSCHRIFT

(45) Veröffentlichungstag der Patentschrift: **25.08.93**

(21) Anmeldenummer: **88200598.6**

(22) Anmeldetag: **30.03.88**

(51) Int. Cl.⁵: **G10L 5/06**

(54) **Verfahren zum Erkennen zusammenhängend gesprochener Wörter.**

(30) Priorität: **03.04.87 DE 3711342**

(43) Veröffentlichungstag der Anmeldung:
**05.10.88 Patentblatt 88/40**

(45) Bekanntmachung des Hinweises auf die
Patenterteilung:
**25.08.93 Patentblatt 93/34**

(84) Benannte Vertragsstaaten:
**DE FR GB**

(56) Entgegenhaltungen:
**GB-A- 2 159 996**
**US-A- 4 601 054**

**ICASSP 85, IEEE INTERNATIONAL CONFE-
RENCE ON ACOUSTICS, SPEECH, AND SI-
GNAL PROCESSING, Tampa, Florida, 26. - 29.
März 1985, Band 2, Seiten 854-857, IEEE, New
York, US; D. MERGEL et al.: "Phonetically
guided clustering for isolated word recognition"**

(73) Patentinhaber: **Philips Patentverwaltung
GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **Ney, Hermann, Dr.
Halstenbeker Weg 65
D-2000 Hamburg 54(DE)**
Erfinder: **Noll, Andreas
Goldhähnchenstieg 3
D-2000 Hamburg 53(DE)**

(74) Vertreter: **Poddig, Dieter, Dipl.-Ing. et al
Philips Patentverwaltung GmbH Wendenstrasse 35c
D-20097 Hamburg (DE)**

EP 0 285 222 B1

ICASSP 83, IEEE INTERNATIONAL CONFE-RENCE ON ACOUSTICS, SPEECH AND SI-GNAL PROCESSING, Boston, Massachusetts, 14. - 16. April 1983, Band 3, Seiten 1037-1043, IEEE, New York, US; M.J. RUSSELL et al.: "Some techniques for incorporating local timescale variability information into a dy-namc time-warping algorithm for automatic speech recognition"

ICASSP 85, IEEE INTERNATIONAL CONFE-RENCE ON ACOUSTICS, SPEECH, AND SI-GNAL PROCESSING, Tampa, Florida, 26. - 29. März 1985, Band 2, Seiten 850-853, IEEE, New York, US; L.C. SAUTER: "Isolated word reco-gnition using a segmental approach"

AT & T TECHNICAL JOURNAL, Band 64, Nr. 5, Mai/Juni 1985, Seiten 1047-1063, AT &T, New York, US; A.F. BERGH et al.: "Incorporation of temporal structure into a vector-quantization-based preprocessor for speaker-independent, isolated-word recogni-tion"

**Beschreibung**

Die Erfindung betrifft ein Verfahren zum Erkennen eines aus zusammenhängend gesprochenen Wörtern abgeleiteten Sprachsignals, das aus einer zeitlichen Folge von Sprachwerten besteht, von denen jeder einen Abschnitt des Sprachsignals angibt, wobei die Sprachwerte nacheinander mit Referenzwerten verglichen werden, von denen jeweils eine Gruppe von Referenzwerten ein Wort eines vorgegebenen Vokabulars darstellt und die Referenzwerte von Phonemen abgeleitet sind, und jedes Vergleichsergebnis zu einer minimalen Abstandssumme, die beim vorhergehenden Sprachwert für in vorgegebener Nachbarschaft liegende Referenzwerte erreicht wurde, vermehrt um einen von der Nachbarschaft abhängigen Zeitverzerrungswert, als neue Abstandssumme addiert wird.

Ein Verfahren zum Erkennen zusammenhängend gesprochener Wörter ist grundsätzlich bekannt aus der DE-OS 32 15 868. Dabei werden die einzelnen Wörter aus Folgen von Referenzwerten aufgebaut. Die Berücksichtigung von Phonemen ist ebenfalls bekannt, beispielsweise aus Bell System Technical Journal, Vol. 62, No. 4, April 1983, pp 1035-1073. Dabei wird ein Phonem vereinfacht durch einen einzigen Referenzwert dargestellt, und in einem normal gesprochenen Satz passen dann allgemein mehrere aufeinanderfolgende Sprachwerte auf einen solchen Phonem-Referenzwert, da die Dauer eines Abschnitts des Sprachsignals, der durch einen Sprachwert dargestellt wird, normalerweise kürzer als ein Phonem ist. Die Anzahl Male, die ein Sprachwert einem Phonem-Referenzwert entspricht, wird dabei jedoch nicht berücksichtigt bzw. geht eher in eine Vergrößerung der Abstandssumme ein, wodurch das tatsächliche Sprachsignal nicht optimal bewertet wird.

Aufgabe der Erfindung ist es, bei der Erkennung der Phoneme deren Dauer in der natürlich gesprochenen Sprache gemäß Lernsprachsignalen so zu berücksichtigen, daß die wahrscheinlichste Dauer der Phoneme auch am günstigsten bewertet wird.

Diese Aufgabe wird erfindungsgemäß dadurch gelöst, daß jedes Phonem aus einer Anzahl von untereinander zumindest abschnittsweise gleichen Referenzwerten gebildet wird, wobei die Anzahl vorher anhand von Lernsprachwerten bestimmt wurde, daß bei Referenzwerten innerhalb des Phonems die Abstandssumme nur des vorhergehenden Referenzwertes und nur beim letzten Referenzwert eines Phonems bzw. Abschnitts auch die Abstandssumme desselben Referenzwertes unter Verwendung eines entsprechend größeren Zeitverzerrungswertes und nur beim ersten Referenzwert eines Phonems bzw. Abschnitts innerhalb eines Wortes die Abstandssumme jedes Referenzwertes im vorhergehenden Phonem unter Verwendung von mit steigender Entfernung größeren Zeitverzerrungswerten berücksichtigt wird.

Durch das erfindungsgemäße Verfahren wird erreicht, daß eine Folge von Sprachwerten, die zu einem Phonem gut paßt, nur eine geringe Abstandssumme erzeugt, solange die Anzahl der dem Phonem optimal entsprechenden Sprachsignale gleich der Anzahl der Referenzwerte im Phonem ist. Wenn das gesprochene Phonem jedoch länger ist als das Referenzphonem, bleibt der Vergleich zwischen Sprachsignalen und Phonem quasi auf dem letzten Referenzwert im Phonem stehen und erhöht dann durch den größeren Zeitverzerrungswert, der dann verwendet wird, die Abstandssumme. Wenn umgekehrt das gesprochene Phonem kürzer ist als das Referenzphonem, springt der Vergleich mit den Sprachwerten aus einem Punkt innerhalb des Phonems auf den Anfang, d.h. auf den ersten Referenzwert des folgenden Phonems, wobei ebenfalls ein höherer Zeitverzerrungswert berücksichtigt wird. Auf diese Weise geht ein Unterschied zwischen einem gesprochenen Phonem und einem Referenzphonem unmittelbar in die Erkennung ein, so daß Wörter mit gleichen, jedoch unterschiedlich lang gesprochenen Phonemen besser voneinander unterschieden werden können. Dabei wird weiterhin davon ausgegangen, daß ein Phonem zumindest abschnittsweise stationär ist, d.h. durch eine Folge konstanter Referenzwerte beschrieben wird. Dies trifft bei einem natürlichen Sprachsignal tatsächlich nicht exakt zu, jedoch wäre eine genauere Nachbildung der Phonemeverläufe durch kontinuierlich variierende Referenzwerte während der Lernphase auch aufgrund begrenzter Anzahl von Lernsprachwerten allgemein so unvollkommen, daß die Erkennungsfehler geringer sind, wenn die Phoneme durch stationäre Modelle nicht ganz real, aber dafür während der Lernphase weitgehend exakt nachgebildet werden. Dabei kann zur besseren Annäherung ein Phonem aus z.B. drei stationären Abschnitten gebildet werden, von denen der erste und der letzte Abschnitt den Übergang zum benachbarten Phonem annähert. Auch eine Nachbildung eines kontinuierlichen Übergangs zwischen stationären Mittelabschnitten wäre denkbar.

Häufig werden die Sprachwerte dadurch gebildet, daß für jeden Abschnitt des Sprachsignals beispielsweise die spektralen Komponenten oder die LPC-Koeffizienten gebildet werden, so daß jeder Sprachwert aus einer Anzahl Komponenten besteht. In diesem Falle ist es zweckmäßig, daß jedes Vergleichsergebnis aus der Differenz zwischen den Komponentenwerten von Sprachwert und Referenzwert gebildet wird. Die Differenzen zwischen den einzelnen Komponentenwerten lassen sich nämlich technisch einfach berechnen.

Die Weiterverarbeitung der einzelnen Differenzen zwischen den Komponentenwerten kann auf verschiedene Weise erfolgen. Wenn jeder verschiedene Sprachwert als Vektor eines entsprechend vieldimensionalen Raumes betrachtet wird, kann das Vergleichsergebnis als euklidischer Abstand bestimmt werden, indem das Vergleichsergebnis aus der Summe der Quadrate der Komponenten-Differenzen gebildet wird. Eine etwas einfachere Möglichkeit besteht darin, daß das Vergleichsergebnis aus der Summe der Beträge der Komponenten-Differenzen gebildet wird. Um die Vergleichswerte in entsprechender Weise zu bestimmen, ist es zweckmäßig, daß die Komponenten der Referenzwerte durch Bildung der Mittelwerte der Komponenten der zu dem jeweiligen Referenzwert gehörenden Sprachwerten von Lernsprachsignalen erzeugt werden. Bei der Bildung des Vergleichsergebnisses aus der Summe der Beträge ist es noch günstiger, wenn in mathematisch exakter Weise die Komponenten der Referenzwerte durch Bildung der Mediane der Komponenten der zu dem jeweiligen Referenzwert gehörenden Sprachwerten von Lernsprachsignalen erzeugt werden.

Diese Art der Bildung der Vergleichsergebnisse berücksichtigt den tatsächlichen Einfluß des Unterschiedes zwischen Sprachwerten und Referenzwerten etwas unvollkommen. Eine andere Möglichkeit besteht nach einer weiteren Ausgestaltung der Erfindung darin, daß während einer Lernphase aus den dabei gewonnenen Sprachwerten Prototyp-Referenzwerte ausgewählt werden und zu jeder Kombination von Prototyp-Referenzwert und Phonem ein Abstandsmaß bestimmt wird, daß während der Erkennung jeder Sprachwert mit allen Prototyp-Referenzwerten verglichen und jeweils der Prototyp-Referenzwert mit dem geringsten Abstand dem Sprachwert zugeordnet wird und daß als Vergleichsergebnis das Abstandsmaß für den dem jeweiligen Sprachwert zugeordneten Prototyp-Referenzwert und dem Phonem verwendet wird. Auf diese Weise wird jeder Sprachwert zunächst auf den nächstliegenden Prototyp-Referenzwert zurückgeführt, wobei der Abstand zu den übrigen Prototyp-Referenzwerten allerdings danach nicht weiter berücksichtigt wird. Dies wäre zwar grundsätzlich möglich, erfordert jedoch zusätzlichen Aufwand. Die Auswahl der Prototyp-Referenzwerte erfolgt zweckmäßig derart, daß die Summe der Abstände aller Lernsprachwerte zum jeweils nächstgelegenen Prototyp-Referenzwert ein Minimum ist. Dies bedeutet, daß aus den Lernsprachwerten sogenannte Cluster gebildet werden, die gut voneinander separierbar sind, wobei der Prototyp-Referenzwert in jedem Cluster die kleinste Abstandssumme über alle Abstände zu den Lernsprachwerten innerhalb des jeweiligen Clusters hat und die Cluster so gewählt sind, daß die Gesamtsumme ebenfalls ein Minimum hat.

Das Abstandsmaß für jede Kombination von Prototyp-Referenzwerten und Phonemen ist zweckmäßig mit der Wahrscheinlichkeit verknüpft, mit der ein Prototyp-Referenzwert innerhalb eines Phonems auftritt. Zweckmäßig ist es, daß zum Bestimmen des Abstandsmaßes der Logarithmus des Verhältnisses der Häufigkeit eines Prototyp-Referenzwertes in einem Phonem zur Häufigkeit aller Prototyp-Referenzwerte in diesem Phonem ermittelt wird. Diese Häufigkeiten lassen sich leicht ermitteln.

Diese Maßnahme ist jedoch streng genommen nur ideal bei einer unendlich großen Menge von Lernsprachwerten. Bei einer begrenzten Menge von Lernsprachwerten bzw. Lernsätzen ist es jedoch möglich, daß einzelne Prototyp-Referenzwerte insgesamt relativ selten auftreten, jedoch bei ihrem Auftreten ein Phonem sehr gut charakterisieren. Ein anderer Prototyp-Referenzwert, der insgesamt sehr häufig auftritt, kann durch seine große Gesamthäufigkeit in demselben Phonem ebenfalls eine relativ hohe Häufigkeit haben, charakterisiert dieses Phonem jedoch tatsächlich nicht. Um diesen Einfluß zu überwinden, ist es zweckmäßig, daß zum Bestimmen des Abstandsmaßes die Verbundwahrscheinlichkeit von Prototyp-Referenzwerten und Phonemen dadurch angenähert wird, daß Unterschiede der Häufigkeit, mit der während der Lernphase die einzelnen Prototyp-Referenzwerte aufgetreten sind und mit der die verschiedenen Phoneme aufgetreten sind, durch Normierung zumindest verringert werden. Durch die Normierung der Häufigkeiten wird erreicht, daß alle Prototyp-Referenzwerte und alle Phoneme so berücksichtigt werden, als wäre ihre Gesamthäufigkeit über alle Lernsprachwerte gleich.

Eine Anordnung zur Durchführung des erfindungsgemäßen Verfahrens ist in weiteren Unteransprüchen gekennzeichnet.

Ausführungsbeispiele des erfindungsgemäßen Verfahrens werden nachstehend anhand der Zeichnung näher erläutert. Es zeigen:

Fig. 1 die Übergänge entsprechend einem Markov-Modell und die daraus folgenden Übergänge bei aufeinanderfolgenden Sprachwerten,

Fig. 2 ein Blockschaltbild einer Anordnung zur Durchführung des erfindungsgemäßen Verfahrens.

Bei der Erkennung eines gesprochenen Satzes wird das Sprachsignal in eine Anzahl gleich langer Abschnitte unterteilt, beispielsweise mit einer Länge von 10 ms, und für jeden Abschnitt werden beispielsweise die Spektralwerte, die Formanten oder die LPC-Koeffizienten ermittelt. Diese werden mit entsprechenden Referenzwerten verglichen, die in einer Lernphase anhand von Lernsprachproben gewonnen werden. Die Erkennung erfolgt dabei im wesentlichen wortweise, wobei jedes Wort aus einer Folge von Referenz-

4

werten besteht. Um die Folge von Referenzwerten für jedes Wort zu ermitteln, muß in der Lernphase auch jedes Wort entsprechend oft gesprochen werden.

Jedes Wort besteht jedoch auch aus einer Anzahl von Phonemen, wobei die Gesamtanzahl von Phonemen für alle Wörter begrenzt ist. Um die Lernphase zu verkürzen, ist es zweckmäßig, die Lernphase auf der Basis von Phonemen durchzuführen. Die zu erkennenden Wörter werden dann aufgrund eines festliegenden Aussprachelexikons aus den Phonemen zusammengesetzt, so daß in der Lernphase nicht alle Wörter, sondern zumindest alle Phoneme genügend häufig gesprochen sein müssen.

Innerhalb eines Phonems wird angenommen, daß das Sprachsignal im wesentlichen stationär ist, d.h. das Phonem besteht aus einer Folge von gleichen Referenzwerten. Um Phonemübergänge zu berücksichtigen, kann jedes Phonem auch aus drei Abschnitten aufgebaut sein, wobei normalerweise jeder Abschnitt wiederum für sich stationär ist und der mittlere Abschnitt das eigentliche Phonem beschreibt, während der erste und der letzte Abschnitt eines Phonems den Übergang zu benachbarten Phonemen innerhalb des Wortes nachbildet.

Bei der Erkennung eines Sprachsignals, beispielsweise gemäß der eingangs genannten DE-OS 32 15 868, erfolgt eine Zeitanpassung des zu erkennenden Signals an die Folgen von Referenzwerten der einzelnen Wörter, die mit Mitteln der dynamischen Programmierung durchgeführt wird, wobei nach folgendem Verfahren ein Summen-Abstandswert ermittelt wird:

$$D(i,j) = d(x(i),j) + \min \{D(i-1,j') + T(j,j')\} \qquad (1)$$

Dabei bedeutet i einen Zeitpunkt und x(i) einen Sprachwert zu einem bestimmten Zeitpunkt, während j einen Referenzwert darstellt. Es wird also jeder Sprachwert x(i) mit einer Anzahl Referenzwerte verglichen und der Unterschied bzw. der Abstand d(x(i),j) bestimmt und zu der kleinsten Abstandssumme addiert, die beim vorhergehenden Sprachwert zum Zeitpunkt i-1 bei einem Referenzwert j' erreicht wurde, der in vorgegebener Nachbarschaft zum momentan betrachteten Referenzwert liegt, wobei außerdem ein Zeitverzerrungswert T(j,j') addiert wird, der von dieser Nachbarschaft abhängt, d.h. um so größer ist, je weiter der Referenzwert j' in der Folge der Referenzwerte jeweils eines Wortes vom momentanen Referenzwert j entfernt liegt. Üblicherweise wird dabei die Diagonale bevorzugt, weil dies dem wahrscheinlichsten Verlauf entspricht.

In einem Phonem sind nun die Referenzwerte abschnittsweise als konstant angenommen, so daß es naheliegen könnte, diesen Referenzwert nur einmal vorzusehen. Um jedoch die Zeitdauer des Phonems richtig nachzubilden, ist der Referenzwert innerhalb des Phonems so oft vorhanden, wie er der tatsächlichen Dauer des Phonems bzw. des Phonemabschnitts entspricht. In der Figur ist links eine Folge von Zuständen entsprechend einem Markov-Modell vorhanden, wobei mögliche Übergänge zwischen den einzelnen Zuständen angegeben sind. Die Zustände zwischen den beiden waagerechten Strichen sollen ein Phonem p bzw. einen Phonemabschnitt darstellen. Der erste Zustand im Phonem p wird von irgendeiner Stelle im vorhergehenden Phonem p-1 erreicht. Der zeitlich folgende Zustand liegt darüber und kann von dem ersten Zustand erreicht werden, es ist jedoch auch möglich, vom ersten Zustand direkt in den ersten Zustand des folgenden Phonems p + 1 überzugehen. Dieser Übergang ist jedoch sehr unwahrscheinlich. Entsprechend ist der Übergang vom zweiten zum dritten Zustand sehr viel wahrscheinlicher als der Übergang vom zweiten Zustand zum ersten des folgenden Phonems usw. Der letzte Zustand kann mehrfach durchlaufen werden, was jedoch ebenfalls unwahrscheinlicher ist als der Übergang zum folgenden Phonem.

Auf der rechten Seite der Figur ist angedeutet, welche zeitlichen Folgen der nichtlinearen Zeitanpassung bei der dynamischen Programmierung möglich sind. Der neue Sprachwert zum Zeitpunkt i wird mit dem Referenzwert j = 1 verglichen, und dieser lokale Abstand wird zur Abstandssumme desjenigen Referenzwertes im vorhergehenden Phonem p-1 addiert, der zusammen mit dem entfernungsabhängigen Zeitverzerrungswert ein Minimum ergibt.

Ferner wird der momentane Sprachwert auch mit dem zweiten Referenzwert j = 2 verglichen, der jedoch den gleichen Wert hat wie der Referenzwert j = 1, so daß sich auch der gleiche lokale Abstand ergibt. Dieser wird jedoch zur Abstandssumme addiert, die sich zum vorherigen Zeitpunkt i-1 beim ersten Referenzwert ergeben hat. Entsprechend wird der lokale Abstand beim nächsten Referenzwert zur bisherigen Abstandssumme des zweiten Referenzwertes addiert, usw. Lediglich beim letzten Referenzwert wird auch die gleiche Abstandssumme desselben Referenzwertes zum Zeitpunkt i-1 berücksichtigt, und dies entspricht dem Fall, daß im gesprochenen Sprachsignal das betreffende Phonem länger ist als in der Lernphase ermittelt. In diesem Falle wird wieder ein größerer Zeitverzerrungswert berücksichtigt. Lediglich der erste Referenzwert des folgenden Phonems p + 1 kann von jedem anderen Referenzwert im Phonem p erreicht werden, jeweils unter Berücksichtigung entsprechender Zeitverzerrungswerte, die die Übergangswahrscheinlichkeiten im Markov-Modell berücksichtigen.

Für die Bildung des lokalen Abstandes d(x(i),j) gibt es verschiedene Möglichkeiten, die sich auch auf die Bildung der Referenzwerte auswirkt.

Eine einfache Möglichkeit besteht in der Bestimmung des Abstandswertes als euklidischer Abstand auf folgende Weise:

$$d_1(x(i),j) = \sum_k (x_k(i)-r_k(j))^2 \qquad (2)$$

Hierbei stellt $r_k(j)$ die Komponenten des Referenzwertes dar, von denen jede Komponente k gleich dem Mittelwert der Komponenten der Sprachwerte in der Lernphase sind.

Eine andere Möglichkeit für den Abstandswert ist der absolute Betragsabstand:

$$d_2(x(i),j) = \sum_k \left| x_k(i)-r_k(j) \right| \qquad (3)$$

Hier werden die einzelnen Komponenten $r_k(j)$ eines Referenzwertes gleich dem Median der Komponenten der zugehörigen Sprachwerte in der Lernphase gewählt. Näherungsweise kann allerdings auch hier der Mittelwert verwendet werden, da dies keinen wesentlichen Einfluß auf die Erkennung hat.

Diese Abstandswerte müssen für jeden neuen Sprachwert x(i) für alle Referenzwerte bzw. bei eingeschränkter Suche für alle aktiven Referenzwerte berechnet werden, was einen erheblichen Zeitaufwand erfordert. Eine weitere Möglichkeit, den lokalen Abstandswert zu bestimmen, ist auf folgende Weise gegeben:

$$d_3(x(i),j) = -\log(p(l/j)) \qquad (4)$$

Dabei gibt l einen Vektor $Z_l$ aus einer endlichen Menge von Prototyp-Referenzwerten $Z_1$, $Z_2$...$Z_n$ an, der den geringsten Abstand vom Sprachwert x(i) hat. Dieser Abstand kann wie bei den vorher angegebenen Möglichkeiten bestimmt werden. Der lokale Abstand ist dann also der negative Logarithmus der bedingten Wahrscheinlichkeit, daß der Prototyp-Referenzwert $Z_l$, der dem momentanen Sprachwert x(i) am nächsten liegt, in dem Phonem j bzw. Phonemabschnitt während der Lernphase aufgetreten ist. Ein Phonem entspricht dabei nicht direkt einem einzigen Prototyp-Referenzwert, deren Anzahl im übrigen größer gewählt wird als die Anzahl Phoneme, z.B. um den Faktor 3 größer.

Die Prototyp-Referenzwerte werden während der Lernphase aus allen dabei auftretenden Sprachwerten x(i) so bestimmt, daß aus allen Sprachwerten Untermengen $C_l$ gebildet werden, die jeweils einem Prototyp-Referenzwert zugeordnet sind. Die Abstände aller Sprachwerte jeweils einer Untermenge zum zugehörigen Prototyp-Referenzwert werden aufsummiert, und diese Summen werden über alle n Prototyp-Referenzwerte aufsummiert, so daß sich folgender Gesamtwert ergibt:

$$D = \sum_{l=1}^{n} \sum_{\substack{i=1 \\ i \in C_l}}^{b_l} d(x(i),l) \qquad (5)$$

Die Untermengen $C_l$ und die darin liegenden Prototyp-Referenzwerte werden nun so variiert, daß der Gesamtwert D möglichst minimal wird. Da dies während der Lernphase ausgeführt wird, ist hierfür keine Echtzeit-Verarbeitung erforderlich, sondern der einmalige Rechenaufwand dafür kann auch längere Zeit in Anspruch nehmen.

Die bedingte Wahrscheinlichkeit p(l/j), daß ein Prototyp-Referenzwert $C_l$ in einem Phonem j auftritt, kann aus dem Verhältnis der Häufigkeiten, daß während der Lernphase dieser Prototyp in dem betreffenden Phonem auftritt, zur Anzahl aller Prototyp-Referenzwerte in diesem Phonem auf folgende Weise bestimmt werden.

$$p(1/j) = \frac{H(1,j)}{H(j)} \qquad (6)$$

Dies setzt jedoch eine genügend große Menge von Lernsprachwerten bzw. eine gute Verteilung der Lernsprachwerte voraus.

Im praktischen Fall bei einer begrenzten Menge von Lernsprachwerten kann es nun passieren, daß ein Prototyp-Referenzwert insgesamt eine geringe Häufigkeit gegenüber anderen Prototyp-Referenzwerten hat. Dann ist das Verhältnis der Häufigkeit dieses Prototyp-Referenzwerts in einem bestimmten Phonem zu der Häufigkeit aller Prototyp-Referenzwerte in diesem Phonem notwendig klein, obwohl dieser besondere Prototyp-Referenzwert fast nur in diesem Phonem auftritt. Ferner ist die Auftrittshäufigkeit verschiedener Phoneme unterschiedlich, was dann zu einem geringen Abstandsmaß und damit zu einer Bevorzugung dieser Phoneme bei der Erkennung führt. Aus diesem Grunde ist also ein Abstandsmaß anzustreben, bei dem die Unterschiede der Häufigkeit, mit der während der Lernphase die einzelnen Prototyp-Referenzwerte aufgetreten sind, und die Häufigkeit, mit der die verschiedenen Phoneme aufgetreten sind, durch eine Normierung zumindest verringert werden.

Eine derartige Normierung erfolgt in einem gewissen Maße durch die nachfolgend angegebenen Gleichungen:

$$m_l = \frac{1}{n} \sum_{j=1}^{n} H(l,j)$$

$$N = \min_{l}(m_l)$$

$$Q_{l_j} = H(l,j)\frac{N}{m_l}$$

$$n_j = \min_{l} Q_{l_j} \tag{7}$$

$$N_j = \max_{l} Q_{l_j}$$

$$S_j = \frac{B}{N_j - n_j}$$

$$p'(l/j) = \left(\frac{Q_{l,j}}{n_j \quad G}\right)^{S_j}$$

Zunächst wird also die Häufigkeit jedes Prototyp-Vektors $Z_l$, in diesem Falle die mittlere Häufigkeit eines Prototyp-Referenzwertes in einem Phonem, ermittelt, daraus das Minimum N bestimmt und anschließend alle Häufigkeiten auf dieses Minimum normiert, wodurch normierte Häufigkeiten $Q_{lj}$ entstehen. Grundsätzlich hätte die Normierung auch auf jeden anderen Werten erfolgen können, wesentlich ist, daß die Summe der normierten Häufigkeiten über jeden Prototyp-Referenzwert gleich ist. Danach wird die kleinste und die größte normierte Häufigkeit aller Prototyp-Referenzwerte für jeweils ein Phonem ermittelt, und danach wird ein Skalierungsfaktor $S_j$ bestimmt, der bewirkt, daß die Werte aller bedingten Wahrscheinlichkeiten $p'(l/j)$ bzw. die Logarithmen einen konstanten Wertebereich haben. Die negativen Logarithmen dieser bedingten Wahrscheinlichkeiten sind dann die Abstandsmaße, die für die Erkennung verwendet werden. Da in der Klammer für die bedingte Wahrscheinlichkeit auf die minimale Häufigkeit eines Prototyp-Referenzwertes in einem Phonem normiert wird, ist der Abstandswert für diese minimale normierte Häufigkeit gleich Null, während dieser Wert für die maximale Häufigkeit durch den Wert B aus der Gleichung für den Skalisierungswert $S_j$ bestimmt ist. Dieser Wert B wird zweckmäßig so gewählt, daß er für die technische Durchführung der Berechnung einen günstigen Wertebereich der Abstandsmaße ergibt. Auf diese Weise wird weniger die bedingte Auftrittswahrscheinlichkeit, sondern der gegenseitige Informationsgehalt zwischen Lernsprachwerten und Phonemen berücksichtigt. Dies führt bei der Erkennung zu günstigeren Ergebnissen.

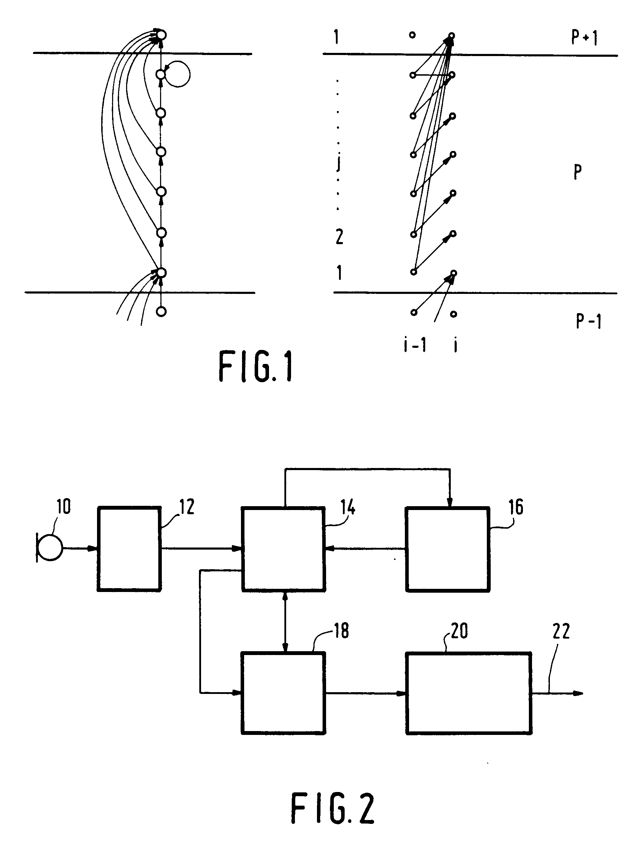

Bei einer Anordnung zur Durchführung des beschriebenen Verfahrens, die in Fig. 2 als schematisches Blockschaltbild dargestellt ist, wird das über das Mikrofon 10 aufgenommene Sprachsignal in einer Teilanordnung 12 verstärkt und in eine Folge digitaler Sprachwerte umgesetzt, die einer Verarbeitungsanordnung 14 zugeführt werden. Diese adressiert bei jedem neuen Sprachwert aus der Anordnung 12 nacheinander alle Speicherstellen eines ersten Speichers 16 für Referenzwerte und vergleicht jeden Referenzwert mit dem Sprachsignal. Ferner adressiert die Verarbeitungsanordnung 14 einen zweiten Speicher 18, der die bisher ermittelten Abstandssummen für die einzelnen Referenzwerte enthält, und liest für jeden aus dem ersten Speicher 16 ausgelesenen Referenzwert die Abstandswerte von bestimmten Referenzwerten aus dem zweiten Speicher 18 aus. Bei einem Referenzwert des ersten Speichers 16, der innerhalb einer Folge gleicher Referenzwerte liegt, wird nur eine Abstandssumme, nämlich die des vorhergehenden Referenzwertes, aus dem zweiten Speicher 18 ausgelesen und unverändert zum Vergleichsergebnis addiert und an der Stelle des momentanen Referenzwertes des Speichers 16 im Speicher 18 wieder abgespeichert.

Bei einem Referenzwert am Ende einer Folge wird dagegen außer der Abstandssumme des vorhergehenden Referenzwertes auch die Abstandssumme desselben Referenzwertes aus dem Speicher 18 ausgelesen, wobei letztere jedoch um einen Zeitverzerrungswert erhöht wird. Das Vergleichsergebnis wird dann zu der kleineren der beiden Abstandssummen bzw. der erhöhten Abstandssumme addiert und im Speicher 18 an der Stelle des momentanen Referenzwertes, d.h. des letzten Referenzwertes der Folge, abgespeichert.

Bei dem ersten Referenzwert einer Folge wird nicht nur der Abstandswert des letzten Referenzwertes der vorhergehenden Folge, sondern auch die Abstandssummen der vorhergehenden Referenzwerte dieser vorhergehenden Folge aus dem Speicher 18 ausgelesen, wobei diese Abstandssummen jedoch abhängig von der Lage des zugehörigen Referenzwertes innerhalb der Folge um einen Zeitverzerrungswert erhöht werden. Die kleinste dieser so erhöhten bzw. nicht erhöhten Abstandssummen wird in der Verarbeitungsanordnung 14 zum Vergleichsergebnis addiert, und die Summe wird im Speicher 18 bei dem betreffenden ersten Referenzwert der Folge abgespeichert. Auf diese Weise werden alle im Speicher 18 enthaltenen Abstandssummen mit jedem von der Anordnung 12 zugeführten neuen Sprachwert aktualisiert.

Die Abstandssummen des Speichers 18 werden von einer weiteren Verarbeitungsanordnung 20 in einer der bekannten Weisen weiterverarbeitet, um daraus die Folge der erkannten Wörter, deren Phoneme also in der Summe die geringste Abstandssumme aufweisen, zu bestimmen und am Ausgang 22 abzugeben.

Der Speicher 16 kann anstelle der Referenzwerte für die einzelnen Phoneme auch Prototyp-Referenzwerte sowie jeweils ein zugeordnetes Abstandsmaß enthalten, wobei die Verarbeitungsanordnung 14 dann bei jedem neu zugeführten Sprachwert den am nächsten liegenden zugeführten Prototyp-Referenzwert ermittelt. Das dem Prototyp-Referenzwert zugeordnete Abstandsmaß wird dann als Vergleichsergebnis verwendet.

**Patentansprüche**

1. Verfahren zum Erkennen eines aus zusammenhängend gesprochenen Wörtern abgeleiteten Sprachsignals, das aus einer zeitlichen Folge von Sprachwerten besteht, von denen jeder einen Abschnitt des Sprachsignals angibt, wobei die Sprachwerte nacheinander mit Referenzwerten verglichen werden, von denen jeweils eine Gruppe von Referenzwerten ein Wort eines vorgegebenen Vokabulars darstellt und die Referenzwerte von Phonemen abgeleitet sind, und jedes Vergleichsergebnis zu einer minimalen Abstandssumme, die beim vorhergehenden Sprachwert für in vorgegebener Nachbarschaft liegende Referenzwerte erreicht wurde, vermehrt um einen von der Nachbarschaft abhängigen Zeitverzerrungswert, als neue Abstandssumme addiert wird,
dadurch gekennzeichnet, daß jedes Phonem aus einer Anzahl von untereinander zumindest abschnittsweise gleichen Referenzwerten gebildet wird, wobei die Anzahl vorher anhand von Trainingsdaten bestimmt wurde, daß bei Referenzwerten innerhalb des Phonems die Abstandssumme nur des vorhergehenden Referenzwertes und nur beim letzten Referenzwert eines Phonems bzw. Abschnitts auch die Abstandssumme desselben Referenzwertes unter Verwendung eines entsprechend größeren Zeitverzerrungswertes und nur beim ersten Referenzwert eines Phonems bzw. Abschnitts innerhalb eines Wortes die Abstandssumme jedes Referenzwertes im vorhergehenden Phonem unter Verwendung von mit steigender Entfernung größeren Zeitverzerrungswerten berücksichtigt wird.

2. Verfahren nach Anspruch 1, wobei die Sprachwerte aus einer Anzahl Komponenten bestehen,
dadurch gekennzeichnet, daß jedes Vergleichsergebnis aus der Differenz zwischen den Komponentenwerten von Sprachwert und Referenzwert gebildet wird.

3. Verfahren nach Anspruch 2,
dadurch gekennzeichnet, daß das Vergleichsergebnis aus der Summe der Quadrate der Komponenten-Differenzen gebildet wird.

**4.** Verfahren nach Anspruch 2,
dadurch gekennzeichnet, daß das Vergleichsergebnis aus der Summe der Beträge der Komponenten-Differenzen gebildet wird.

**5.** Verfahren nach einem der Ansprüche 2 bis 4,
dadurch gekennzeichnet, daß die Komponenten der Referenzwerte durch Bildung der Mittelwerte der Komponenten der zu dem jeweiligen Referenzwert gehörenden Sprachwerten von Lernsprachsignalen erzeugt werden.

**6.** Verfahren nach Anspruch 4,
dadurch gekennzeichnet, daß die Komponenten der Referenzwerte durch Bildung der Mediane der Komponenten der zu dem jeweiligen Referenzwert gehörenden Sprachwerten von Lernsprachsignalen erzeugt werden.

**7.** Verfahren nach Anspruch 1,
dadurch gekennzeichnet, daß während einer Lernphase aus den dabei gewonnenen Sprachwerten Prototyp-Referenzwerte ausgewählt werden und zu jeder Kombination von Prototyp-Referenzwert und Phonem ein Abstandsmaß bestimmt wird, daß während der Erkennung jeder Sprachwert mit allen Prototyp-Referenzwerten verglichen und jeweils der Prototyp-Referenzwert mit dem geringsten Abstand dem Sprachwert zugeordnet wird und daß als Vergleichsergebnis das Abstandsmaß für den dem jeweiligen Sprachwert zugeordneten Prototyp-Referenzwert und dem Phonem verwendet wird.

**8.** Verfahren nach Anspruch 7,
dadurch gekennzeichnet, daß die Auswahl der Prototyp-Referenzwerte derart erfolgt, daß die Summe der Abstände aller Lernsprachwerte zum jeweils nächstgelegenen Prototyp-Referenzwert minimal ist.

**9.** Verfahren nach Anspruch 7 oder 8,
dadurch gekennzeichnet, daß zum Bestimmen des Abstandsmaßes der Logarithmus des Verhältnisses der Häufigkeit eines Prototyp-Referenzwertes in einem Phonem zur Häufigkeit aller Prototyp-Referenzwerte in diesem Phonem ermittelt wird.

**10.** Verfahren nach einem der Ansprüche 7 oder 8,
dadurch gekennzeichnet, daß zum Bestimmen des Abstandsmaßes die Verbundwahrscheinlichkeit von Prototyp-Referenzwerten und Phonemen dadurch angenähert wird, daß Unterschiede der Häufigkeit, mit der während der Lernphase die einzelnen Prototyp-Referenzwerte aufgetreten sind und mit der die verschiedenen Phoneme aufgetreten sind, durch Normierung zumindest verringert werden.

**11.** Anordnung zur Durchführung des Verfahrens nach einem der Ansprüche 1 bis 10, mit
- einem ersten Speicher (16) für Referenzwerte,
- einer Eingangsanordnung (10, 12) zum Erzeugen von digitalen Sprachwerten aus einem akustisch eingegebenen Sprachsignal,
- einer Verarbeitungsanordnung (14) zum Vergleichen der Sprachwerte mit Referenzwerten und zum Erzeugen von Abstandssummen,
dadurch gekennzeichnet, daß der erste Speicher (16) jeweils Folgen von mehreren gleichen Referenzwerten enthält und daß die Verarbeitungsanordnung (14) beim Vergleich eines neuen Sprachwertes mit den Referenzwerten zur Bestimmung der minimalen neuen Abstandssumme das dabei erzeugte Vergleichsergebnis bei jedem Referenzwert innerhalb einer Folge zur unveränderten Abstandssumme eines vorhergehenden Referenzwerts der Folge, bei jedem ersten Referenzwert einer Folge zur Abstandssumme eines Referenzwertes einer vorhergehenden Folge, die um einen von der Lage dieses Referenzwerts in der Folge abhängigen ersten Zeitverzerrungswert erhöht ist, und bei jedem letzten Referenzwert einer Folge zur Abstandssumme desselben Referenzwerts, die um einen zweiten festen Zeitverzerrungswert erhöht ist, addiert und diese neue Abstandssumme in einem zweiten Speicher (18) speichert.

**12.** Anordnung nach Anspruch 11,
dadurch gekennzeichnet, daß der erste Speicher (16) Prototyp-Referenzwerte und fest zugeordnete Abstandsmaße enthält und daß die Verarbeitungsanordnung (14) jeden neuen Sprachwert mit allen Prototyp-Referenzwerten vergleicht und von dem nächstliegenden Prototyp-Referenzwert das zugeord-

EP 0 285 222 B1

nete Abstandsmaß als Vergleichsergebnis verwendet.

13. Anordnung nach Anspruch 11 oder 12,
dadurch gekennzeichnet, daß die Verarbeitungsanordnung (14) durch einen Prozessor, insbesondere einen Mikroprozessor, gebildet ist.

**Claims**

1. A method of recognizing a speech signal which is derived from coherently spoken words and which consists of a temporal sequence of speech values, each of which indicates a section of the speech signal, the speech values being successively compared with reference values, each time group of reference values representing a respective word of a given vocabulary and the reference values being derived from phonemes and each comparison result being added to a minimum distance sum, attained for the preceding speech value for reference values in a given neighbourhood increased by a time distortion value depending upon the neighbourhood, as a new distance sum, characterized in that each phoneme is formed from a number of reference values which are at least section-wise equal to each other, the number having been predetermined with the aid of learning speech values, and in that for reference values within the phoneme the distance sum of only the preceding reference value is taken into account and that only for the last reference value of a phoneme or section also the distance sum of the reference value itself while using a correspondingly larger time distortion value is taken into account, and that only for the first reference value of a phoneme or section within a word the distance sum of each reference value in the preceding phoneme while using time distortion values increasing with distance is taken into account.

2. A method as claimed in Claim 1, in which the speech values consist of number of components, characterized in that each comparison result is formed from the difference between the component values of speech value and reference value.

3. A method as claimed in Claim 2, characterized in that the comparison result is formed from the sum of the squares of the component differences.

4. A method as claimed in Claim 2, characterized in that the comparison result is formed from the sum of the absolute amounts of the component differences.

5. A method as claimed in any one of Claims 2 to 4, characterized in that the components of the reference values are produced by forming the mean values of the components of the speech values of learning speech signals associated with the respective reference value.

6. A method as claimed in Claim 4, characterized in that the components of the reference values are produced by forming the median values of the components of the speech values of learning speech signals associated with the respective reference value.

7. A method as claimed in Claim 1, characterized in that during a learning phase prototype reference values are selected from the speech signals then produced, for each combination of prototype reference value and phoneme there being determined a distance measure, in that during the recognition each speech value is compared with all prototype reference values and each time the prototype reference value having the smallest distance is assigned to the speech value, and in that the distance measure for the prototype reference value assigned to the respective reference value and the phoneme is used as the comparison result.

8. A method as claimed in Claim 7, characterized in that the prototype reference values are selected in such a manner that the sum of the distances of all learning speech values from the respective next prototype reference value is minimum.

9. A method as claimed in Claim 7 or 8, characterized in that for determining the distance measure the logarithm of the ratio of the frequency of occurrence of a prototype reference value in a phoneme to the frequency of occurrence of all prototype reference values in this phoneme is determined.

11

**10.** A method as claimed in any one of Claims 7 or 8, characterized in that for determining the distance measure the probability of association of prototype reference values and phonemes is approached in that differences of the frequency of occurrence of the individual prototype reference values during the learning phase and that at which the various phonemes have occurred are at least reduced by standardization.

**11.** An arrangement for carrying out the method claimed in any one of Claims 1 to 10, comprising
- a first memory (16) for reference values,
- an input circuit (10, 12) for producing digital speech values from an acoustically input speech signal,
- a processing circuit (14) for comparing the speech values with reference values and for producing distance sums,

characterized in that the first memory (16) contains sequences of several equal reference values and in that the processing circuit (14), upon comparison of a new speech value with the reference values in order to determine the minimum new distance sum, adds the comparison result then produced for each reference value within a sequence to the unchanged distance sum of a preceding reference value of the sequence, for each first reference value of a sequence to the distance sum of a reference value of a preceding sequence, increased by a first time distortion value depending upon the position of this reference value in the sequence, and for each last reference value of a sequence to the distance sum of the reference value itself, increased by a second fixed time distortion value, and stores this new distance sum in a second memory (18).

**12.** An arrangement as claimed in Claim 11, characterized in that the first memory (16) contains prototype reference values and permanently associated distance measures and in that the processing circuit (14) compares each new speech value with all prototype reference values and utilizes the associated distance measure of the nearest subsequent prototype reference value as the comparison result.

**13.** An arrangement as claimed in Claim 11 or 12, characterized in that the processing circuit (14) is formed by a processor, notably a microprocessor.

**Revendications**

**1.** Procédé de reconnaissance d'un signal vocal dérivé de mots prononcés en continu et constitué d'une séquence chronologique de valeurs vocales qui fournissent chacune un segment du signal vocal, les valeurs vocales étant comparées successivement avec des valeurs de référence, parmi lesquelles un groupe de valeurs de référence représente chaque fois un mot d'un vocabulaire prédéterminé et les valeurs de référence étant dérivées de phonèmes, chaque résultat de comparaison étant ajouté à une somme d'écarts minimale qui a été obtenue dans le cas de la valeur vocale précédente pour des valeurs de référence situées dans un voisinage prédéterminé et a été augmentée d'une valeur de distorsion temporelle dépendant du voisinage, pour former une nouvelle somme d'écarts, caractérisé en ce que chaque phonème est formé d'un certain nombre de valeurs de référence identiques au moins par segments, ce nombre étant préalablement déterminé à l'aide de valeurs vocales d'apprentissage, que dans le cas de valeurs de référence situées à l'intérieur du phonème, on ne prend en compte que la somme des écarts de la valeur de référence précédente, que dans le cas uniquement de la dernière valeur de référence d'un phonème ou d'un segment de phonème on prend en compte également la somme des écarts de la même valeur de référence, en utilisant une valeur par conséquent plus grande de la distorsion temporelle, et que pour la première valeur de référence uniquement d'un phonème ou d'un segment à l'intérieur d'un mot on tient compte de la somme des écarts de chaque valeur de référence du phonème précédent, en utilisant des valeurs de distorsion temporelle qui augmentent avec la distance.

**2.** Procédé selon la revendication 1, dans lequel les valeurs vocales sont constituées d'un certain nombre de composantes, caractérisé en ce que chaque résultat de comparaison est formé par la différence entre les valeurs des composantes de la valeur vocale et de la valeur de référence.

**3.** Procédé selon la revendication 2, caractérisé en ce que le résultat de la comparaison est formé de la somme des carrés des différences des composantes.

**4.** Procédé selon la revendication 2, caractérisé en ce que le résultat de la comparaison est formé de la somme des valeurs des différences des composantes.

**5.** Procédé selon l'une des revendications 2 à 4, caractérisé en ce que les composantes des valeurs de référence sont créées à partir des signaux vocaux appris par formantion de la valeur moyenne des composantes des valeurs vocales appartenant à chacune des valeurs de référence.

**6.** Procédé selon la revendication 1, caractérisé en ce que les composante des valeurs de référence sont créées à partir des signaux vocaux appris par formation de la médiane des composantes des valeurs vocales appartenant à chaque valeur de référence.

**7.** Procédé selon la revendication 1, caractérisé en ce que, pendant une phase d'apprentissage, des valeurs de référence prototypes sont sélectionnées à partir des valeurs vocales alors obtenues et une mesure d'écart est déterminée pour chaque combinaison de valeur de référence prototype et de phonème, que, pendant la reconnaissance, chaque valeur vocale est comparée à toutes les valeurs de référence prototypes et la valeur de référence prototype est chaque fois associée à la valeur vocale présentant le plus petit écart, et que l'on utilise comme résultat de la comparaison la mesure d'écart pour la valeur de référence prototype associée à chaque valeur vocale et le phonème.

**8.** Procédé selon la revendication 7, caractérisé en ce que la sélection des valeurs de référence prototypes s'effectue de telle sorte que la somme des écarts de toutes les valeurs vocales apprises par rapport à la valeur de référence prototype chaque fois la plus proche soit minimale.

**9.** Procédé selon la revendication 7 ou 8, caractérisé en ce que pour la détermination de la valeur d'écart on calcule le logarithme du rapport entre la fréquence d'apparition d'une valeur de référence prototype dans un phonème et la fréquence d'apparition de toutes les valeurs de référence prototypes de ce phonème.

**10.** Procédé selon la revendication 7 ou 8, caractérisé en ce que, pour la détermination de la mesure de l'écart, on approche la probabilité de liaison entre les valeurs de référence prototypes et les phonèmes au moins en diminuant par normalisation la différence entre la fréquence à laquelle les valeurs de référence prototypes individuelles sont apparues au cours de la phase d'apprentissage et la fréquence à laquelle les différents phonèmes sont apparus.

**11.** Circuit destiné à l'exécution du procédé selon l'une des revendications 1 à 10, comportant :
- une première mémoire (16) pour valeurs de référence,
- un dispositif d'entrée (10, 12) pour créer des valeurs vocales numériques à partir d'un signal vocal introduit acoustiquement,
- un dispositif de traitement (14) servant à comparer les valeurs vocales à des valeurs de référence et à créer des sommes d'écarts,

caractérisé en ce que la première mémoire (16) contient respectivement des séquences de plusieurs valeurs de référence identiques et que le dispositif de traitement (14) lors de la comparaison d'une nouvelle valeur vocale avec les valeurs de référence, en vue de déterminer la nouvelle somme d'écarts minimale, ajoute le résultat de la comparasion ainsi produit, pour chaque valeur de référence à l'intérieur d'une séquence à la somme d'écarts non modifiée d'une valeur de référence précédente de la séquence, pour chaque première valeur de référence d'une séquence à la somme d'écarts d'une valeur de référence d'une séquence précédente, qui est augmentée d'une première valeur de distorsion temporelle dépendant de la position de cette valeur de référence dans la séquence et, pour chaque dernière valeur de référence d'une séquence à la somme d'écarts de cette même valeur de référence qui est augmentée d'une seconde valeur de distorsion temporelle fixe, et stocke cette nouvelle somme d'écarts dans une deuxième mémoire (18).

**12.** Circuit selon la revendication 11, caractérisé en ce que la première mémoire (16) contient des valeurs de référence prototypes et des mesures d'écart qui y sont fixement associées, et en ce que le dispositif de traitement (14) compare chaque nouvelle valeur vocale à toutes les références prototypes et utilise comme résultat de la comparaison la valeur d'écart associée de la valeur de référence prototype suivante.

13. Circuit selon la revendication 11 ou 12, caractérisé en ce que le dispositif de traitement (14) est formé par un processeur, et en particulier par un microprocesseur.

FIG.1

FIG.2